# EUROPÄISCHE PATENTSCHRIFT

(11) **EP 1 449 000 B1**
(45) Veröffentlichungstag und Bekanntmachung des Hinweises auf die Patenterteilung: **30.07.2008**
(21) Anmeldenummer: 02787767.9
(22) Anmeldetag: 22.11.2002
(51) Int. Cl.: H02P 5/68, H02P 7/29

(54) **STEUERGERÄT**
CONTROL DEVICE
APPAREIL DE COMMANDE

(30) Priorität: 27.11.2001 DE 10158846
(43) Veröffentlichungstag der Anmeldung: 25.08.2004
(73) Patentinhaber: AFL Europe GmbH, 72636 Frickenhausen (DE)
(72) Erfinder: HERKE, Dirk, 72622 Nürtingen (DE); KANAMÜLLER, Thomas, 73732 Esslingen (DE)
(74) Vertreter: Beck, Jürgen
(86) Internationale Anmeldenummer: PCT/EP2002/013111
(87) Internationale Veröffentlichungsnummer: WO 2003/047083

(56) Entgegenhaltungen:
- JP-A- 11 235 078
- US-A- 3 818 297
- US-A- 4 866 356
- US-B1- 6 236 175

## Beschreibung

Die Erfindung betrifft ein Steuergerät zum Betreiben eines mindestens einen Elektromotor aufweisenden Lastkreises, umfassend eine Steuerstufe, die ein pulsweitenmoduliertes Steuersignal erzeugt, eine den Lastkreis speisende Leistungsstufe mit einem durch das pulsweitenmodulierte Steuersignal angesteuerten elektronischen Schalter, ein dem Lastkreis parallelgeschaltetes Freilaufelement und eine Überwachung, welche so ausgebildet ist, dass sie durch Unterdrücken mindestens eines Einschaltintervalls des pulsweitenmodulierten Steuersignals ein Messausschaltintervall erzeugt, in welchem bei nicht blockiertem Elektromotor nach einer Freilaufzeit eine Generatorspannung detektierbar ist, und innerhalb des Messausschaltintervalls die Spannung im Lastkreis überwacht und mit einem Grenzwert vergleicht.

Bei dieser aus der US-A-4,866,356 bekannten Lösung ist aufgrund der pauschalen Spannungsüberwachung im Lastkreis nur möglich, das Auftreten einer Spannung im Lastkreis während des Messausschaltintervalls zu erkennen oder nicht zu erkennen.

Umfasst jedoch der Lastkreis nicht nur einen Elektromotor, sondern zwei Elektromotoren, so tritt bei der Blockierung eines der beiden Elektromotoren noch eine Spannung im Lastkreis auf, die von dem nicht blockierten Elektromotor erzeugt wird.

Der Erfindung liegt daher die Aufgabe zugrunde, ein Steuergerät der eingangs beschriebenen Art derart zu verbessern, dass eine differenzierte Analyse der im Messausschaltintervall auftretenden Spannungen möglich ist.

Diese Aufgabe wird bei einem Steuergerät der eingangs beschriebenen Art erfindungsgemäß dadurch gelöst, dass mindestens zwei im Lastkreis parallelgeschaltete Elektromotoren vorgesehen sind, dass die Überwachung eine Blockierüberwachung ist, die so ausgebildet ist, dass ein Prüfdurchlauf mit mindestens einem Messzyklus ausführt wird, in welchem zu verschiedenen definierten Zeitpunkten nach Beginn mindestens eines Messausschaltintervalls eine Spannungsabtastung erfolgt, dass die bei den Spannungsabtastungen im Lastkreis ermittelte Spannungen mit mindestens einem Blockadegrenzwert verglichen werden und dass bei Nichtüberschreiten des mindestens einen Blockadegrenzwerts ein Blockadezustandssignal erzeugt wird.

Der Vorteil der erfindungsgemäßen Lösung ist darin zu sehen, dass die zu verschiedenen Zeitpunkten nach Beginn des Ausschaltintervalls erfolgten Abtastungen der Spannung im Lastkreis die Möglichkeit schaffen, das Auftreten und die Werte der Spannungen zu erfassen und somit zwischen verschiedenen Zuständen im Lastkreis, insbesondere verschiedenen Blockadezuständen, zu unterscheiden.

Damit besteht die Möglichkeit zu differenzieren, ob einer der Elektromotoren blockiert ist oder beide und außerdem besteht die Möglichkeit, die Erkennungssicherheit der Blockierüberwachung zu verbessern.

Weitere vorteilhafte Ausbildungen der Blockierüberwachung sind Gegenstand der abhängigen Ansprüche.

Prinzipiell wäre es denkbar, innerhalb eines Messzyklus die Zeitpunkte, zu denen Spannungsabtastungen erfolgen, beliebig im Messausschaltintervall zu wählen.

Eine besonders günstige Lösung sieht jedoch vor, dass die Spannungsabtastungen im Lastkreis zu verschiedenen Zeitpunkten in Form einer Reihe von Spannungsabtastungen erfolgt, wobei die in der Reihe jeweils nächstfolgende Spannungsabtastung in einem größeren Zeitabstand vom Beginn des mindestens einen Messausschaltintervalls erfolgt als die in der Reihe vorausgehende Spannungsabtastung.

Diese Lösung ermöglicht es in besonders vorteilhafter Weise, die relevanten Zeitbereiche innerhalb des Messausschaltintervalls durch Spannungsabtastungen zu erfassen.

Besonders günstig lässt sich eine derartige Reihe von aufeinanderfolgenden Spannungsabtastungen dann generieren und auswerten, wenn zwischen den jeweils aufeinanderfolgenden Spannungsabtastungen eine ungefähr gleich große Zeitspanne liegt.

Prinzipiell wäre es denkbar, die Spannungsabtastungen eines Messzyklus auf verschiedene Messausschaltintervalle zu verteilen. Um möglichst wenig Messausschaltintervalle für den Prüfdurchlauf zu benötigen, ist vorzugsweise vorgesehen, dass die Spannungsabtastungen eines Messzyklus während eines Messausschaltintervalls erfolgen.

Um ferner eine möglichst hohe Sicherheit bei der Aussage, ob eine Blockade vorliegt oder nicht, zu erhalten, ist vorzugsweise vorgesehen, dass der Prüfdurchlauf mehrere Messzyklen umfasst.

Prinzipiell wäre es denkbar, das Ergebnis mehrerer Messzyklen zusammenzufassen und aus dem zusammengefassten Ergebnis eine Blockadeprüfung durchzuführen. Besonders günstig ist es jedoch, wenn während eines jeden Messzyklus eine vollständige Blockadeprüfung im Messausschaltintervall erfolgt, so dass nach jedem Messzyklus eine vollständige Aussage zur Frage der verschiedenen möglichen Blockaden zur Verfügung steht.

Prinzipiell wäre es denkbar, nach Durchführung eines jeden Messzyklus das lokale Zustandssignal auszugeben. Besonders günstig ist es jedoch, insbesondere um unnötige Blockademeldungen zu vermeiden, wenn vor Ausgabe eines Blockadezustandssignals der Prüfdurchlauf mit mehreren Messzyklen durchgeführt wird.

Hinsichtlich der Bewertung der in den mehreren Messzyklen ermittelten Blockadezustände wären unterschiedliche Möglichkeiten denkbar. Beispielsweise wäre es denkbar, einen Mittelwert zu bilden.

Um jedoch sicherzugehen, dass nicht fälschlicherweise eine Blockierung gemeldet wird, ist vorgesehen, dass beim einmaligen Feststellen eines blockierten Zustands des Lastkreises während eines der Messzyklen des Prüfdurchlaufs keine Blockade gemeldet wird.

Um möglichst wenig Messzyklen durchzuführen, da diese zur Geräuschbildung bei den Elektromotoren beitragen, ist vorzugsweise vorgesehen, dass nach dem Feststellen eines blockadefreien Zustands des Lastkreises der Prüfdurchlauf abgebrochen wird.

Bei der Überprüfung des Blockadezustands wäre es prinzipiell ausreichend, entweder die Freilaufzeit während des Messausschaltintervalls zu erfassen oder nach der Freilaufzeit die sich ausbildende Generatorspannung.

Da jedoch die Messungen der Spannung im Lastkreis erheblichen Störungen unterworfen sind, ist es besonders im Hinblick auf eine möglichst sichere Aussage über den Blockadezustand günstig, wenn mit den Spannungsabtastungen sowohl die Dauer der Freilaufzeit als auch die Größe einer Generatorspannung nach der Freilaufzeit überprüft wird. Diese doppelte Erfassung der für den Blockadezustand signifikanten Zustände während des Meßausschaltintervalls verringert die Störanfälligkeit erheblich.

Prinzipiell ist es dabei denkbar, die Größe der Generatorspannung durch Vergleich mit einem Grenzwert zu ermitteln.

Die Aussagesicherheit wird jedoch noch zusätzlich gesteigert, wenn die Größe der Generatorspannung durch unterschiedliche Grenzwerte bei unterschiedlichen Spannungsabtastungen während des Prüfdurchlaufs erfaßt wird.

Hinsichtlich der Zuordnung der Grenzwerte zu den einzelnen Spannungsabtastungen sind die unterschiedlichsten Möglichkeiten denkbar.

So ist es aus Gründen der Einfachheit vorteilhaft, wenn der Grenzwert innerhalb eines Meßzyklus konstant ist, so daß innerhalb eines Meßzyklus sämtliche Spannungsabtastungen die gemessene Spannung mit einem Grenzwert verglichen wird.

Um mehrere Vergleiche zu haben, ist vorzugsweise vorgesehen, daß mehrere Meßzyklen durchgeführt werden und daß der Grenzwert von Meßzyklus zu Meßzyklus verändert wird, um mit unterschiedlichsten Grenzwerten den Verlauf der Spannung innerhalb eines Meßausschaltintervalls analysieren zu können.

Dabei wäre es prinzipiell denkbar, zunächst mit einem hohen Grenzwert zu beginnen und beim nächsten Meßzyklus einen niedrigeren Grenzwert einzusetzen.

Hinsichtlich der Aussagekraft der Messungen ist es jedoch besonders vorteilhaft, wenn der Grenzwert bei dem nächstfolgenden Meßzyklus größer ist als der Grenzwert des vorausgehenden Meßzyklus.

Alternativ zum Vorsehen eines während eines Meßzyklus konstanten Grenzwerts sieht eine andere vorteilhafte Lösung vor, daß innerhalb eines Meßzyklus ein Vergleich der Spannungen mit verschiedenen Grenzwerten erfolgt.

Beispielsweise wäre es dabei denkbar, zwei unterschiedliche Grenzwerte innerhalb eines Meßzyklus einzusetzen.

Besonders zweckmäßig hat sich jedoch eine Lösung erwiesen, bei welcher bei jeder Spannungsabtastung innerhalb eines Meßzyklus ein Vergleich mit einem unterschiedlichen Grenzwert erfolgt.

Eine besonders günstige Methode sieht dabei vor, daß bei den Spannungsabtastungen die nächstfolgende Spannungsabtastung bei einem höheren Grenzwert erfolgt als die vorangehende Spannungsabtastung.

Darüber hinaus wurden im Zusammenhang mit der Auswahl der Grenzwerte keine näheren Angaben gemacht.

So wäre es beispielsweise denkbar, die Grenzwerte, auch unterschiedliche Grenzwerte, der Blockadeüberwachung fest zuzuordnen.

Besonders günstig ist es jedoch, wenn mindestens einer der Grenzwerte in Abhängigkeit von einem Tastverhältnis des pulsweitenmodulierten Steuersignals ermittelt wird. Diese Lösung hat sich deshalb als vorteilhaft erwiesen, weil damit die Möglichkeit besteht, bei den Grenzwerten Variationen der sich aufgrund des Tastverhältnisses unterschiedlich ausbildenden Generatorspannungen zu berücksichtigen.

Noch besser ist es, wenn der mindestens eine Grenzwert unter Berücksichtigung der Versorgungsspannung ermittelt wird, wobei vorzugsweise sowohl die Versorgungsspannung als auch das Tastverhältnis des pulsweitenmodulierten Steuersignals berücksichtigt werden.

Vorzugsweise wird seitens der Blockierüberwachung der Grenzwert aus einem gespeicherten Parametersatz unter Heranziehung des Tastverhältnisses des pulsweitenmodulierten Steuersignals und/oder der Versorgungsspannung ermittelt.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine schematische Darstellung des Aufbaus eines erfindungsgemäßen Steuergeräts;
- Fig. 2: eine Darstellung einer Spannung und eines Stroms im Lastkreis über einer gemeinsamen Zeitachse bei blockadefreiem Zustand der Elektromotoren M1 und M2;
- Fig. 3: eine Darstellung der Spannung und des Stroms im Lastkreis ähnlich Fig. 2 bei Blockade eines von zwei Elektromotoren M1 und M2;
- Fig. 4: eine Darstellung einer ersten Betriebsweise des erfindungsgemäßen Steuergeräts im blockadefreien Zustand des Lastkreises;
- Fig. 5: eine Darstellung der ersten Betriebsweise des erfindungsgemäßen Steuergeräts bei einem blockierten Elektromotor im Lastkreis;
- Fig. 6: eine Darstellung einer zweiten Betriebsweise des erfindungsgemäßen Steuergeräts bei einem blockierten Elektromotor im Lastkreis;
- Fig. 7: eine Darstellung eines ersten von mehreren Meßzyklen einer dritten Betriebsweise des erfindungsgemäßen Steuergeräts bei minimalem Blockadegrenzwert;
- Fig. 8: eine Darstellung ähnlich Fig. 7 eines zweiten Meßzyklus der dritten Betriebsweise bei erhöhtem Blockadegrenzwert;
- Fig. 9: eine Darstellung ähnlich Fig. 7 eines dritten Meßzyklus bei der dritten Betriebsweise mit maximalem Blockadegrenzwert und
- Fig. 10: eine Darstellung eines Meßzyklus einer vierten Betriebsweise eines erfindungsgemäßen Steuergeräts mit von Abtastung zu Abtastung ansteigenden Blockadegrenzwerten.

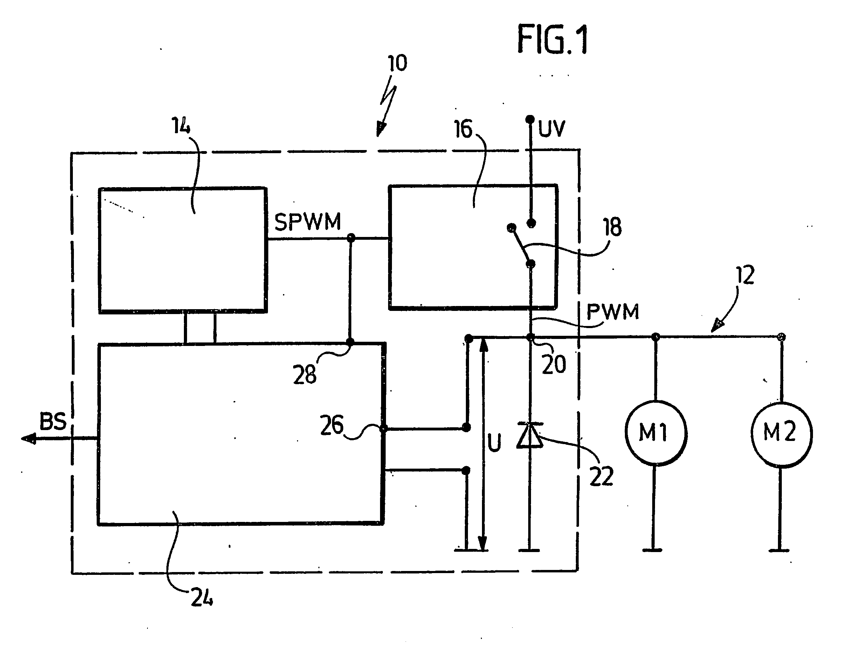

Ein Ausführungsbeispiel eines erfindungsgemäßen Steuergeräts, in Fig. 1 als Ganzes mit 10 bezeichnet, dient zum Betreiben zweier in einem Lastkreis 12 vorgesehener Elektromotoren M1 und M2, die im Lastkreis 12 parallelgeschaltet sind.

Hierzu umfaßt das Steuergerät 10 eine Steuerstufe 14, welche ein pulsweitenmoduliertes Steuersignal SPWM erzeugt, mit welchem eine Leistungsstufe 16 ansteuerbar ist, die ihrerseits einen durch das pulsweitenmodulierte Steuersignal SPWM steuerbaren elektronischen Schalter 18 aufweist, der beispielsweise ein Feldeffekttransistor sein kann. Mit diesem durch das Steuersignal SPWM gesteuerten elektronischen Schalter 18 wird eine dem Steuersignal vom Zeitverlauf her entsprechende pulsweitenmodulierte Speisespannung PWM erzeugt, mit welcher über eine Anschlußklemme 20 des Lastkreises 12 eine Speisung desselben und somit eine Speisung der beiden parallelgeschalteten Elektromotoren M1 und M2 erfolgt.

Zwischen der Anschlußklemme 20 und Masse liegt ferner noch eine als Ganzes mit 22 bezeichnete Freilaufdiode, die beim Abschalten der pulsweitenmodulierten Speisespannung PWM den von den Induktivitäten der Elektromotoren M1 und M2 erzeugten Freilaufstrom übernimmt.

Die Freilaufdiode 22 kann aber auch als ein entsprechend der pulsweitenmodulierten Speisespannung PWM angesteuerter elektronischer Schalter sein.

Ferner umfaßt das erfindungsgemäße Steuergerät 10 eine Blockierüberwachung 24, deren Eingang 26 mit der Anschlußklemme 20 verbunden ist und damit in der Lage ist, eine im Lastkreis 12 anliegende Spannung U zu erfassen.

Die Blockierüberwachung 24 erhält ferner an einem Eingang 28 ebenfalls noch das pulsweitenmodulierte Steuersignal SPWM.

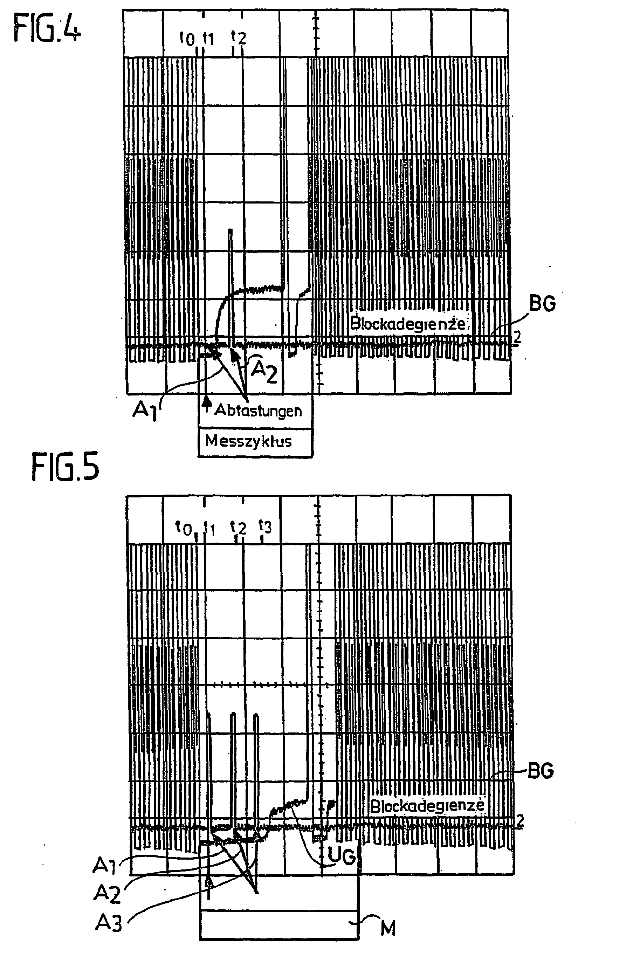

Die Steuerstufe 14 erzeugt bei dem erfindungsgemäßen Steuergerät als pulsweitenmoduliertes Steuersignal SPWM nicht ein reines pulsweitenmoduliertes Signal RPWM, wie in Fig. 4 dargestellt, sondern durch Unterdrücken mehrerer Einschaltintervalle, ein Meßausschaltintervall MAI, auf welches dann wiederum ein reines pulsweitenmoduliertes Signal RPWM folgt.

Die Erzeugung der Einschaltintervalle durch die Steuerstufe 14 wird vorzugsweise durch die Blockierüberwachung initiiert, wobei die Blockierüberwachung nach regelmäßigen Zeitabständen einen Prüfdurchlauf PL startet, der mindestens ein Meßausschaltintervall MAI oder auch mehrere Meßausschaltintervalle MAI umfaßt.

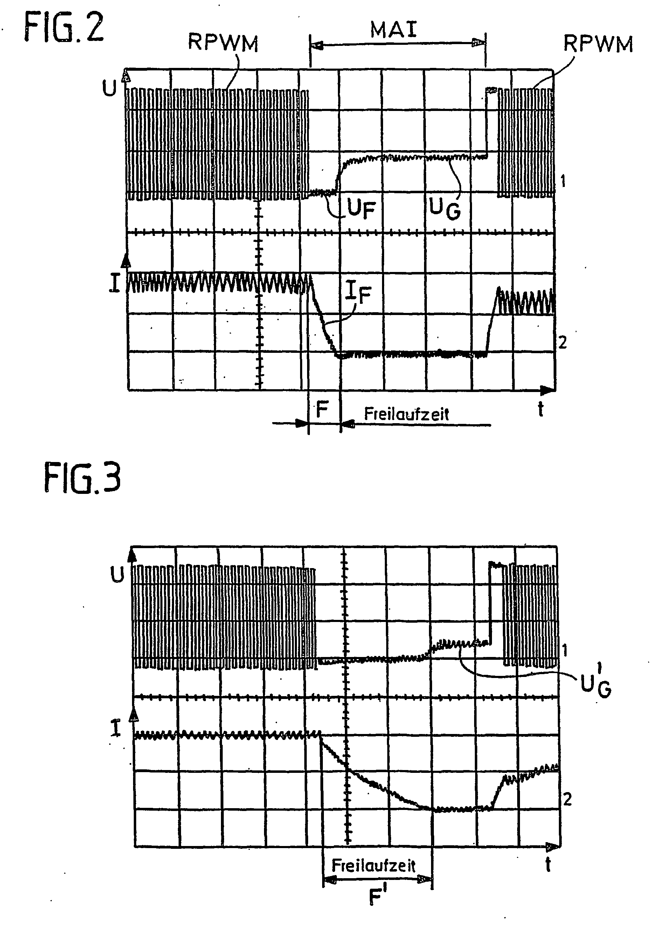

Die Meßausschaltintervalle MAI erstrecken sich dabei über eine Zeitspanne, die größer ist als eine Freilaufzeit F, während welcher ein Freilaufstrom I_{F} über die Freilaufdiode 22 fließt, und zwar so lange, bis der Freilaufstrom I_{F} komplett abgebaut ist (Fig. 2).

Während dieser Freilaufzeit F ist die an der Anschlußklemme 20 von der Blockierüberwachung gemessene Spannung U_{F} kleiner oder gleich Null. Nach der Freilaufzeit F baut sich wieder eine Generatorspannung U_{G} auf, die dadurch entsteht, die Elektromotoren M1 und M2 aufgrund ihrer Trägheit weiter laufen.

Wird nun, wie in Fig. 3 dargestellt, einer der Elektromotoren, beispielsweise der Elektromotor M2, blockiert, so hat dies ein geändertes Verhalten des Freilaufstroms I_{F} und der Generatorspannung (U_{G}) im Meßausschaltintervall MAI zur Folge. Einmal wird die Freilaufzeit F' erheblich größer als im Normalzustand mit zwei nicht blockierten Elektromotoren und zum anderen wird, wenn nur ein Elektromotor, in diesem Fall der Elektromotor M1, läuft, die Generatorspannung U_{G}' erheblich kleiner als die Generatorspannung U_{G} bei zwei nicht blockierten Elektromotoren M1 und M2, wie ein Vergleich von Fig. 2 und Fig. 3 ergibt.

Werden beide Elektromotoren M1 und M2 blockiert, so tritt im Meßausschaltintervall MAI überhaupt keine Generatorspannung U_{G} mehr auf und die Freilaufzeit F wird noch größer. Dieser Fall ist jedoch einfach zu erfassen.

Problematisch ist die Erfassung des Falls, daß einer der beiden parallelgeschalteten Elektromotoren M1 und M2 blockiert ist.

Hierzu wird bei einer ersten Betriebsweise der erfindungsgemäßen Blockierüberwachung 24 ausgehend von einem Beginn des Meßausschaltintervalls MAI zum Zeitpunkt t₀ in immer größeren Zeitabständen t₁, t₂ vom Zeitpunkt t₀ jeweils eine Spannungsabtastung A1, A2 vorgenommen und die bei der jeweiligen Spannungsabtastung A1, A2 ermittelte Spannung mit einem Blockadegrenzwert BG verglichen.

Laufen beispielsweise die beiden Elektromotoren M1 und M2 im Normalbetrieb, so wird, wie in Fig. 4 dargestellt, bei der ersten Abtastung A1 das Überschreiten des Blockadegrenzwerts BG nicht festgestellt, jedoch nach der zweiten Abtastung A2. In diesem Fall wird das Blockadezustandssignal BS "nicht blockiert" ausgegeben.

Damit ist eine weitere Abtastung nicht notwendig, da die Blockierüberwachung 24 eindeutig festgestellt hat, daß keiner der Elektromotoren M1 oder M2 blockiert ist. In diesem Fall werden dann weitere Spannungsabtastungen zu späteren Zeitpunkten unterdrückt.

Ist dagegen, wie in Fig. 5 dargestellt, einer der Elektromotoren M1, M2 blockiert, so setzt die Generatorspannung U_{G} weit später ein als bei nicht blockierten Elektromotoren M1, M2.

Wird somit innerhalb des Meßzyklus M zu verschiedenen, aufeinanderfolgenden Zeitpunkten t₁, t₂ und t₃ die Spannung an der Anschlußklemme 20 abgetastet, so wird kein Überschreiten der Blockadegrenze BG festgestellt, da selbst zum Zeitpunkt t₃ die abgetastete Spannung die Blockadegrenze nicht überschreitet.

Die erste Betriebsweise des erfindungsgemäßen Steuergeräts setzt innerhalb eines Meßzyklus M eine Reihe von beispielsweise drei Abtastungen A1 bis A3 zu Zeitpunkten t₁, t₂ und t₃ ein, welche aufeinanderfolgend nach einem stets größer werdenden Zeitabstand von t₀ durchgeführt werden.

Dabei wird die letzte Abtastung, beispielsweise die Abtastung A3, mit dem größten Zeitabstand t₃ von t₀ so gelegt, daß bei dieser die abgetastete Spannung U den Blockadegrenzwert BG noch nicht überschritten hat, wenn einer der Elektromotoren M1 oder M2 blockiert ist.

In diesem Fall ist somit die Blockierüberwachung in der Lage zu unterscheiden, ob beide Elektromotoren M1 und M2 laufen oder einer der beiden Elektromotoren M1 oder M2 blockiert ist und ein entsprechendes Blockadezustandssignal BS auszugeben. Dagegen ist es nicht möglich zu unterscheiden, ob beide Elektromotoren M1 und M2 blockiert sind oder nur einer.

Die erste Betriebsweise des erfindungsgemäßen Steuergeräts arbeitet dabei nach dem Prinzip der Überprüfung der Dauer der Freilaufzeit F', denn diese wird bei Blockierung eines der Elektromotoren M1, M2 größer, wie im Zusammenhang mit Fig. 3 erläutert, und somit wird das Ansteigen der Generatorspannung U_{G} zu größeren Zeitpunkten nach Beginn des Meßausschaltintervalls MAI hin verschoben.

Da die Abtastung A3 eine Zeitspanne nach der Abtastung A2 erfolgt, stellt somit die Überprüfung, ob der Blockadegrenzwert BG bei der Abtastung A3 überschritten wird oder nicht, im Prinzip eine Überprüfung der Dauer der Freilaufzeit F' dar, um festzustellen, ob einer der Elektromotoren M1, M2 blockiert ist oder nicht.

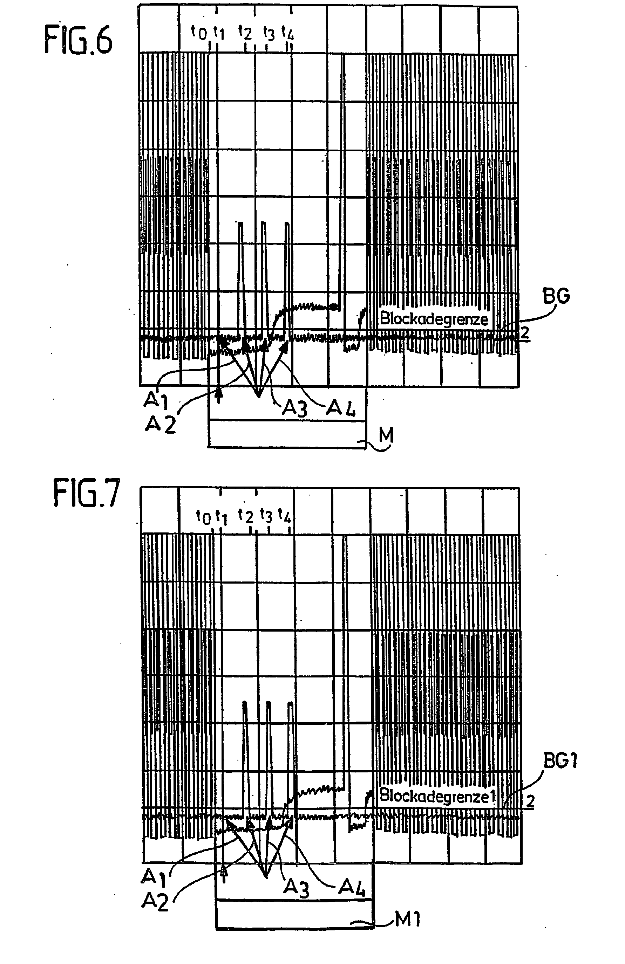

Bei einer zweiten Betriebsweise der erfindungsgemäßen Lösung, dargestellt in Fig. 6, wird die Zahl der Spannungsabtastungen erhöht, beispielsweise wird mit vier Abtastungen A1, A2, A3 und A4 gearbeitet, wobei die letzte Abtastung A4 mit einem Zeitabstand t₄ vom Beginn t₀ des Meßausschaltintervalls erfolgt, zu welchem der Blockadegrenzwert BG auch dann überschritten wird, wenn einer der Elektromotoren M1 oder M2 blockiert ist.

Auch bei der zweiten Betriebsweise muß die Blockierüberwachung 24 erkennen, daß zu einem Zeitabstand t₃ die Blockadegrenze BG nicht überschritten wurde und somit einer der Elektromotoren M1 oder M2 blockiert sein muß. Damit wird das Blockadezustandssignal BS "blockiert" ausgegeben. Die Abtastung A4 zum Zeitabstand t₄ erlaubt jedoch der Blockierüberwachung 24 festzustellen, daß ob beide Elektromotoren M1 und M2 blockiert sind oder ob noch einer derselben funktionsfähig ist.

Auch bei der zweiten Betriebsweise arbeitet die Blockierüberwachung 24 nach dem Prinzip einer Überwachung der Freilaufzeit F', die dadurch durchgeführt wird, daß das entscheidende Kriterium für die Blockierung eines der beiden Elektromotoren M1 oder M2 darin zu sehen ist, daß bei der zweiten Abtastung A2 und bei der dritten Abtastung A3 der Blockadegrenzwert BG nicht überschritten wurde.

Das heißt, daß in diesem Fall die durchgeführten Spannungsabtastungen A1, A2, A3 eine Erfassung der Dauer der Freilaufzeit F' darstellen.

Eine dritte Betriebsweise, dargestellt in Fig. 7 bis 9, sieht vor, daß in gleicher Weise wie bei der zweiten Betriebsweise mit insgesamt vier Abtastungen A1 bis A4 während eines ersten Meßzyklus M1 gearbeitet wird, allerdings werden im Rahmen eines Prüfdurchlaufs PL mehrere Meßzyklen M1 bis M3 nacheinander ausgeführt.

Während des ersten Meßzyklus M1 wird dabei mit einem Blockadegrenzwert BG1 gearbeitet, welcher der niedrigste Blockadegrenzwert ist.

Da jedoch beim ersten Meßzyklus M1 festgestellt wird, daß der Blockadegrenzwert BG1 lediglich bei der vierten Abtastung A4 überschritten wurde, jedoch kein Überschreiten des Blockadegrenzwerts BG1 bei der zweiten Abtastung A2 oder der dritten Abtastung A3 erfolgt ist, erkennt die Blockierüberwachung 24, daß mit großer Wahrscheinlichkeit eine Blockade eines der Elektromotoren M1 und M2 vorliegt.

Allerdings erkennt die Blockierüberwachung 24 gleichzeitig ebenfalls, daß mit großer Wahrscheinlichkeit nicht beide Elektromotoren M1 und M2 blockiert sind.

Nach dem ersten Meßzyklus M1 folgt ein zweiter Meßzyklus M2 und bei diesem zweiten Meßzyklus M2 wird der Blockadegrenzwert vom Blockadegrenzwert BG1 auf den Blockadegrenzwert BG2 angehoben, welcher um einen bestimmten Wert höher als der Blockadegrenzwert BG1 ist.

Bei dem zweiten Meßzyklus M2 erkennt die Blockierüberwachung 24, daß ebenfalls weder bei der zweiten Abtastung A2 noch bei der dritten Abtastung A3 der Blockadegrenzwert BG2 überschritten wurde, so daß nach wie vor starke Indizien für eine Blockade vorliegen.

Aus diesem Grund wird auch nach dem zweiten Meßzyklus M2 der Prüfdurchlauf PL fortgesetzt.

Nach dem zweiten Meßzyklus M2 erfolgt einer dritter Meßzyklus M3 und beim dritten Meßzyklus M3 wird der Blockadegrenzwert auf den maximalen Blockadegrenzwert BG3 angehoben, welcher der höchstmögliche Blockadegrenzwert ist.

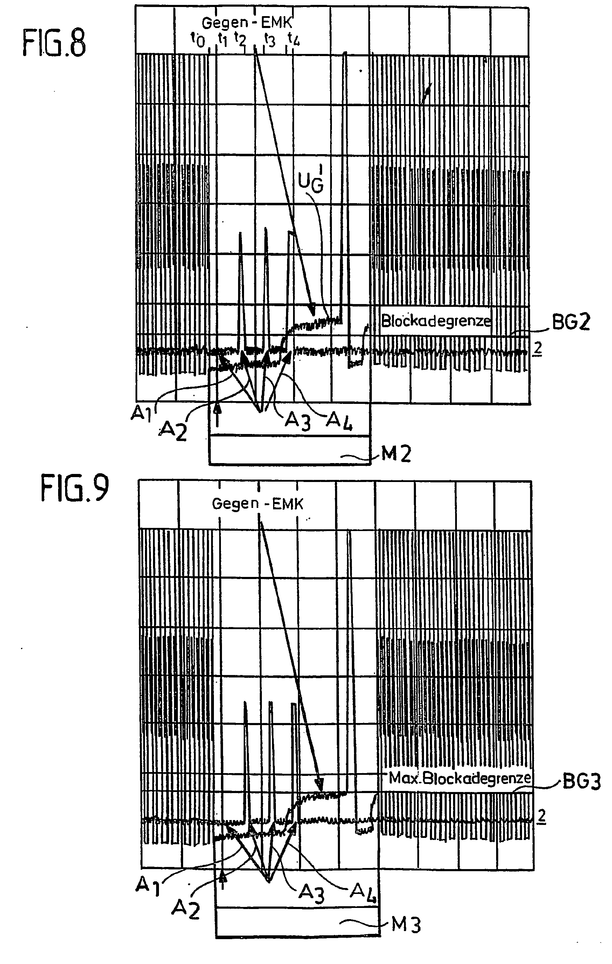

Wie in Fig. 9 erkennbar, wird dabei bei der Spannungsabtastung A4 festgestellt, daß der Blockadegrenzwert BG3 nicht überschritten wird und aus diesem Grund wird eine Blockade eines der Elektromotoren M1, M2 erkannt und das entsprechende Blockadesignal BS "blockiert" ausgegeben.

Im Verlauf des dritten Meßzyklus erkennt die Blockierüberwachung 24 nicht nur erneut, daß sowohl bei der zweiten Abtastung A2 als auch bei der dritten Abtastung A3 kein Überschreiten des Blockadegrenzwerts BG3 erfolgt ist und daß auch der maximale Blockadegrenzwert BG3 von der Spannung U_{G} bei der vierten Abtastung A4 nicht überschritten wurde.

Das heißt, daß obwohl bei der vierten Abtastung A4 eine Spannung U_{G} vorliegt, diese Spannung niedriger ist als die durch den maximalen Blockadegrenzwert BG3 vorgegebene Spannung, so daß eindeutig einer der Elektromotoren M1 und M2 blockiert sein muß.

Die dritte Betriebsweise erlaubt somit nicht nur eine Bestimmung der Vergrößerung der Freilaufzeit F', sondern auch eine Abschätzung der Größe der Generatorspannung U_{G}', und zwar dadurch, daß diese einerseits größer als der erste Blockadegrenzwert BG1 ist, andererseits kleiner als der maximale Blockadegrenzwert BG3.

Damit besteht die Möglichkeit, Störungen der Generatorspannung, die durch äußere Einstreuungen oder kurzzeitige Laufschwankungen oder kurzzeitige Laufhemmungen bedingt wären, auszuschließen.

Würde beispielsweise die Blockierüberwachung 24 bei dem dritten Meßzyklus feststellen, daß der maximale Blockadegrenzwert BG3 von der Generatorspannung U_{G} überschritten wurde, so würde die Blockierüberwachung 24 das Blockadezustandssignal BS "nicht blockiert" ausgeben und einen unmittelbar folgenden erneuten Prüfdurchlauf PL auslösen.

Mit dieser Vorgehensweise kann sichergestellt werden, daß möglichst weitgehend durch Störungen oder Laufschwankungen der Elektromotoren M1, M2 bedingte Meldungen einer Blockierung eines Elektromotors M1, M2 vermieden werden, die beispielsweise eine Systemabschaltung auslösen würden, die aufgrund der nicht vorliegenden Blockierung nicht gerechtfertigt wäre und insbesondere beim Einsatz des erfindungsgemäßen Steuergeräts zum Betreiben parallelgeschalteter Lüftermotoren in einem Kraftfahrzeug nicht tolerierbar ist.

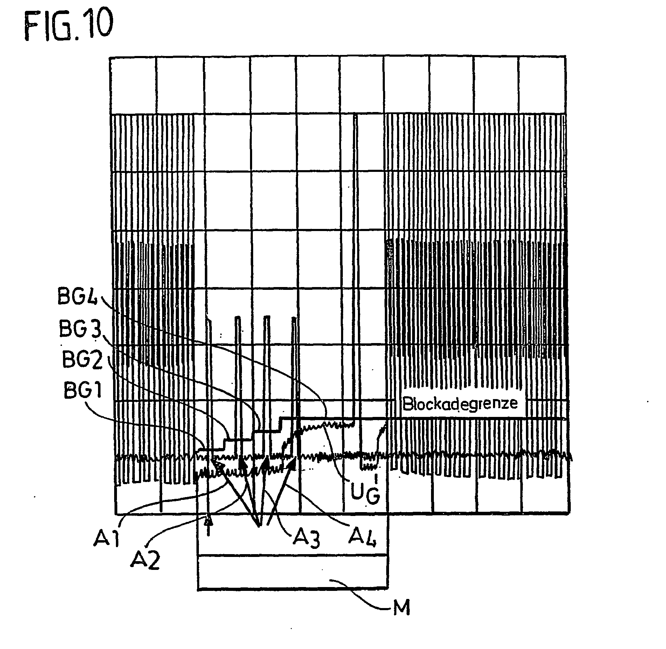

Bei einer vierten Betriebsweise, dargestellt in Fig. 10, wird ebenfalls mit vier Abtastungen A1 bis A4 gearbeitet, wobei von Spannungsabtastung A1 bis A4 zu Spannungsabtastung A1 bis A4 der Blockadegrenzwert BG schrittweise erhöht wird.

Das heißt, daß bei der Spannungsabtastung A1 ein Vergleich mit dem Blockadegrenzwert BG1 erfolgt, bei der Spannungsabtastung A2 ein Vergleich mit dem Blockadegrenzwert BG2, bei der Spannungsabtastung A3 ein Vergleich mit dem Blockadegrenzwert BG3 und bei der Spannungsabtastung A4 ein Vergleich mit dem Blockadegrenzwert BG4, so daß innerhalb eines Meßzyklus M die gesamte Information zur Verfügung steht.

Wie in Fig. 10 erkennbar, ist die Generatorspannung U_{G}' aufgrund des Blockierens eines der Elektromotoren M1 und M2 so niedrig, daß diese unterhalb des Blockadegrenzwerts BG4 liegt und somit von der Blockierüberwachung 24 erkannt wird, daß einer der Elektromotoren M1 oder M2 blockiert ist und - beispielsweise nach einem Prüfdurchlauf PL mit zwei oder drei Meßzyklen M, die dasselbe Ergebnis liefern - das Blockadezustandssignal BS "blockiert" ausgegeben wird.

Bei der vierten Betriebsweise der erfindungsgemäßen Lösung erfolgt ebenfalls nicht nur eine Erfassung der Vergrößerung der Freilaufzeit F', sondern gleichzeitig ebenfalls eine Erfassung der Größe der Generatorspannung U_{G}', wobei bei der vierten Betriebsweise eine relativ geringe Generatorspannung U_{G}' bei der zweiten Abtastung A2 ausreichen würde, um den Blockadegrenzwert BG2 zu überschreiten, so daß die Blockierüberwachung von einem Normalbetrieb der Elektromotoren M1 und M2 ausgehen würde.

Andererseits werden die Blockadegrenzwerte BG3 und BG4 sukzessive gegenüber dem Blockadegrenzwert BG2 angehoben, da das Feststellen eines nicht blockierten Zustands bei der Abtastung A3 nur dann gerechtfertigt ist, wenn die Generatorspannung U_{G} tatsächlich eine ausreichende Größe aufweist, und beispielsweise der Blockadegrenzwert BG2 deshalb nicht überschritten wurde, weil zu diesem Zeitpunkt eine Störung die Generatorspannung U_{G} erniedrigt hat.

Noch höher wird der Blockadegrenzwert BG4 angesetzt, so daß ein Überschreiten desselben ebenfalls nur dann erfolgen kann, wenn die Generatorspannung U_{G} im wesentlichen das Niveau des Normalbetriebs erreichen würde und beispielsweise bei der Spannungsabtastung A2 und A3 nur deshalb ein Überschreiten des Blockadegrenzwerts BG2 bzw. BG3 nicht erfolgt ist, weil beispielsweise - was relativ selten vorkommt - während der beiden Spannungsabtastungen A2 und A3 eine Störung der Generatorspannung U_{G} durch eine Laufschwankung eines der Elektromotoren M1, M2 oder beider Elektromotoren M1, M2 vorlag.

Bei der erfindungsgemäßen Lösung wird vorzugsweise sowohl bei der dritten als auch bei der vierten Betriebsweise der erste Blockadegrenzwert BG1 als fest vorgegebener Grenzwert festgesetzt, während die weiter erhöhten Blockadegrenzwerte BG2, BG3 und BG4 errechnet werden, und zwar unter Berücksichtigung des Tastverhältnisses der Pulsweitenmodulation PWM vor dem Meßausschaltintervall und unter Berücksichtigung einer Versorgungsspannung UV, da beide Größen einen Einfluß auf die sich ausbildende Generatorspannung U_{G} haben.

Beispielsweise beeinflußt das Tastverhältnis der pulsweitenmodulierten Speisespannung PWM die Drehzahl der Motoren M1, M2 und abhängig von dieser Drehzahl des Motors ist auch die sich ausbildende Generatorspannung U_{G} im Meßausschaltintervall MAI abhängig.

Darüber hinaus beeinflußt auch die Versorgungsspannung UV die Drehzahl der Motoren M1, M2, so daß auch aus diesem Grund die Generatorspannung U_{G}' im Meßausschaltintervall MAI von der Versorgungsspannung UV abhängig ist.

Vorzugsweise werden Datensätze mit einer Zuordnung von Blockadegrenzwerten BG zu Bereichen des Tastverhältnisses der pulsweitenmodulierten Speisespannung PWM und Bereichen der Versorgungsspannung UV in einem Speicher der Blockierüberwachung 24 abgelegt und von dieser dann zur Ermittlung der erhöhten Blockadegrenzwerte BG2 bis BG4 aus dem Speicher ausgelesen und zur Berechnung herangezogen.

## Patentansprüche

1. Steuergerät zum Betreiben eines einzigen mindestens einen Elektromotor (M1, M2) aufweisenden Lastkreises (12), umfassend eine Steuerstufe (14), die so ausgebildet ist, dass sie ein pulsweitenmoduliertes Steuersignal (SPWM) erzeugt, eine den Lastkreis (12) speisende Leistungsstufe (16) mit einem durch das pulsweitenmodulierte Steuersignal (SPWM) angesteuerten elektronischen Schalter (18), ein dem Lastkreis (12) parallelgeschaltetes Freilaufelement (22) und eine Überwachung (24), welche so ausgebildet ist, dass sie durch Unterdrücken mindestens eines Einschaltintervalls des pulsweitenmodulierten Steuersignals (SPWM) ein Messausschaltintervall (MAI) erzeugt, in welchem bei nicht blockiertem Elektromotor nach einer Freilaufzeit eine Generatorspannung (U_{G}) detektierbar ist, und innerhalb des Messausschaltintervalls (MAI) die Spannung (U) im Lastkreis (12) überwacht und mit einem Grenzwert (BG) vergleicht,
**dadurch gekennzeichnet, dass** mindestens zwei im Lastkreis (12) parallelgeschaltete Elektromotoren (M1, M2) vorgesehen sind, dass die Überwachung eine Blockierüberwachung (24) ist, die so ausgebildet ist, dass ein Prüfdurchlauf (PL) mit mindestens einem Messzyklus (M) ausführt wird, in welchem zu verschiedenen definierten Zeitpunkten (t₁ bis t₄) nach Beginn (t₀) mindestens eines Messausschaltintervalls (MAI) eine Spannungsabtastung (A1 ... A4) erfolgt, dass die bei den Spannungsabtastungen (A1 ... A4) im Lastkreis (12) ermittelte Spannungen (U1 ... U4) mit mindestens einem Blockadegrenzwert (BG) verglichen werden und dass bei Nichtüberschreiten des mindestens einen Blockadegrenzwerts (BG) ein Blockadezustandssignal erzeugt wird.

2. Steuergerät nach Anspruch 1, **dadurch gekennzeichnet, dass** die Blockierüberwachung (24) so ausgebildet ist, dass während eines Messzyklus die Spannungsabtastungen (A1 ... A4) im Lastkreis (12) zu verschiedenen Zeitpunkten (t₁ ... t₄) in Form einer Reihe von Spannungsabtastungen (A1 ... A4) erfolgt, wobei die in der Reihe jeweils nächstfolgende Spannungsabtastungen (A2 ... A4) in einem größeren Zeitabstand (t₂ ... t₄) vom Beginn (t₀) des mindestens einen Messausschaltintervalls (MAI) erfolgt als die in der Reihe vorausgehende Spannungsabtastung (A1 ... A3).

3. Steuergerät nach Anspruch 2, **dadurch gekennzeichnet, dass** innerhalb der Reihe zwischen jeweils aufeinanderfolgenden Spannungsabtastungen (A1 ... A4) eine ungefähr gleich große Zeitspanne liegt.

4. Steuergerät nach einem der voranstehenden Ansprüche, **dadurch gekennzeichnet, dass** die Blockierüberwachung (24) so ausgebildet ist, dass die Spannungsabtastungen (A1 ... A4) eines Messzyklus (M) während eines Messausschaltintervalls (MAI) erfolgen.

5. Steuergerät nach einem der voranstehenden Ansprüche, **dadurch gekennzeichnet, dass** der Prüfdurchlauf (PL) mehrere Messzyklen (M) umfasst.

6. Steuergerät nach Anspruch 5, **dadurch gekennzeichnet, dass** während eines jeden Messzyklus (M) eine vollständige Blockadeprüfung im Messausschaltintervall (MAI) erfolgt.

7. Steuergerät nach einem der voranstehenden Ansprüche, **dadurch gekennzeichnet, dass** die Blockiereinrichtung (24) so ausgebildet ist, dass vor Ausgabe eines Blockadezustandssignals ein Prüfdurchlauf (PL) mit mehreren Messzyklen (M) durchgeführt wird.

8. Steuergerät nach Anspruch 7, **dadurch gekennzeichnet, dass** beim einmaligen Feststellen eines blockierten Zustands des Lastkreises (12) während eines der Messzyklen (M) des Prüfdurchlaufs (PL) keine Blockade gemeldet wird.

9. Steuergerät nach Anspruch 7 oder 8, **dadurch gekennzeichnet, dass** nach dem Feststellen eines blockadefreien Zustands des Lastkreises (12) der Prüfdurchlauf (PL) abgebrochen wird.

10. Steuergerät nach einem der voranstehenden Ansprüche, **dadurch gekennzeichnet, dass** die Blockiereinrichtung (24) so ausgebildet ist, dass mit den Spannungsabtastungen (A1 ... A4) sowohl die Dauer der Freilaufzeit (F) als auch die Größe einer Generatorspannung (U_{G}) nach der Freilaufzeit (F) überprüft wird.

11. Steuergerät nach Anspruch 10, **dadurch gekennzeichnet, dass** die Größe der Generatorspannung (U_{G}) durch unterschiedliche Grenzwerte (BG1 ... BG4) bei unterschiedlichen Spannungsabtastungen (A1 ... A4) während des Prüfdurchlaufs (PL) erfasst wird.

12. Steuergerät nach einem der voranstehenden Ansprüche, **dadurch gekennzeichnet, dass** die Blockiereinrichtung (24) so ausgebildet ist, dass der Grenzwert (B) innerhalb eines Messzyklus (M) konstant ist.

13. Steuergerät nach Anspruch 12, **dadurch gekennzeichnet, dass** mehrere Messzyklen (M) durchgeführt werden und dass der Grenzwert (BG) von Messzyklus (M) zu Messzyklus (M) verändert wird.

14. Steuergerät nach Anspruch 13, **dadurch gekennzeichnet, dass** der Grenzwert (BG2, BG3) bei dem nächstfolgenden Messzyklus (M) erhöht wird gegenüber dem Grenzwert (BG1, BG2) des vorausgehenden Messzyklus (M).

15. Steuergerät nach einem der Ansprüche 1 bis 11, **dadurch gekennzeichnet, dass** die Blockiereinrichtung (24) so ausgebildet ist, dass innerhalb eines Messzyklus (M) ein Vergleich der Spannungen (U) mit verschiedenen Grenzwerten (BG1' ... BG4') erfolgt.

16. Steuergerät nach Anspruch 15, **dadurch gekennzeichnet, dass** bei jeder Spannungsabtastung (A1 ... A4) innerhalb eines Messzyklus (M) ein Vergleich mit einem unterschiedlichen Grenzwert (BG1, BG2, BG3, BG4) erfolgt.

17. Steuergerät nach Anspruch 16, **dadurch gekennzeichnet, dass** bei den Spannungsabtastungen (A1 ... A4) die nächstfolgende Spannungsabtastung (A2 ... A4) bei einem höheren Grenzwert (BG2, BG3, BG4) erfolgt als die vorausgehende Spannungsabtastung (A1 ... A3).

18. Steuergerät nach einem der voranstehenden Ansprüche, **dadurch gekennzeichnet, dass** die Blockiereinrichtung (24) so ausgebildet ist,
dass mindestens einer der Grenzwerte (BG2, BG3, BG4) in Abhängigkeit von einem Tastverhältnis des pulsweitenmodulierten Steuersignals (SPWM) ermittelt wird.

19. Steuergerät nach einem der voranstehenden Ansprüche, **dadurch gekennzeichnet, dass** die Blockiereinrichtung (24) so ausgebildet ist, dass der mindestens eine Grenzwert (BG2, BG3, BG4) unter Berücksichtigung der Versorgungsspannung (UV) ermittelt wird.

20. Steuergerät nach Anspruch 18 oder 19, **dadurch gekennzeichnet, dass** der Grenzwert (BG2, BG3, BG4) aus einem gespeicherten Parametersatz ermittelt wird.

## Claims

1. Control device for operating a single load circuit (12) having at least one electric motor (M1, M2), comprising a control stage (14) which is so configured that it generates a pulse-width-modulated control signal (SPWM), a power stage (16) supplying the load circuit (12) and having an electronic switch (18) activated by the pulse-width-modulated control signal (SPWM), a freewheeling element (22) connected in parallel to the load circuit (12), and a monitoring means (24) which is so configured that by suppressing at least one switch-on interval of the pulse-width-modulated control signal (SPWM) it generates a measurement switch-off interval (MAI), during which, when the electric motor is not blocked, following a freewheeling time, a generator voltage (U_{G}) is detectable, and monitors within the measurement switch-off interval (MAI) the voltage (U) in the load circuit (12) and compares it to a limit value (BG), **characterized in that** at least two electric motors (M1, M2) connected in parallel in the load circuit (12) are provided, **in that** the monitoring means is a blocking monitoring means (24) which is so configured that a test run (PL) is carried out with at least one measurement cycle (M), during which a voltage sampling (A1 ... A4) is carried out at different defined points in time (t₁ to t₄) after the start (t₀) of at least one measurement switch-off interval (MAI), **in that** the voltages (U1 ...U4) determined in the load circuit (12) during the voltage samplings (A1 ... A4) are compared with at least one blocking limit value (BG), and **in that** a blocking state signal is generated if the at least one blocking limit value (BG) is not exceeded.

2. Control device as defined in claim 1, **characterized in that** the blocking monitoring means (24) is so configured that during a measurement cycle the voltage samplings (A1 ... A4) are carried out in the load circuit (12) at different points in time (t₁ to t₄) in the form of a series of voltage samplings (A1 ... A4), the respectively following voltage samplings (A2 ... A4) in the series being carried out at a greater time interval (t₂ ... t₄) from the start (t₀) of the at least one measurement switch-off interval (MAI) than the preceding voltage sampling (A1 ... A3) in the series.

3. Control device as defined in claim 2, **characterized in that** a time span of approximately the same length exists between respectively consecutive voltage samplings (A1 ... A4) within the series.

4. Control device as defined in any one of the preceding claims, **characterized in that** the blocking monitoring means (24) is so configured that the voltage samplings (A1 ... A4) of one measurement cycle (M) are carried out during one measurement switch-off interval (MAI).

5. Control device as defined in any one of the preceding claims, **characterized in that** the test run (PL) comprises several measurement cycles (M).

6. Control device as defined in claim 5, **characterized in that** a complete blocking check is carried out during each measurement cycle (M) in the measurement switch-off interval (MAI).

7. Control device as defined in any one of the preceding claims, **characterized in that** the blocking means (24) is so configured that a test run (PL) is carried out with several measurement cycles (M) prior to a blocking state signal being issued.

8. Control device as defined in claim 7, **characterized in that** no blocking is reported when a blocked state of the load circuit (12) is ascertained one time during one of the measurement cycles (M) of the test run (PL).

9. Control device as defined in claim 7 or 8, **characterized in that** the test run (PL) is stopped after a blocking-free state of the load circuit (12) is ascertained.

10. Control device as defined in any one of the preceding claims, **characterized in that** the blocking means (24) is so configured that both the duration of the freewheeling time (F) and the amount of a generator voltage (U_{G}) following the freewheeling time (F) are checked with the voltage samplings (A1 ... A4).

11. Control device as defined in claim 10, **characterized in that** the amount of the generator voltage (U_{G}) is detected by means of different limit values (BG1 ... BG4) with different voltage samplings (A1 ... A4) during the test run (PL).

12. Control device as defined in any one of the preceding claims, **characterized in that** the blocking means (24) is so configured that the limit value (B) is constant within a measurement cycle (M).

13. Control device as defined in claim 12, **characterized in that** several measurement cycles (M) are carried out, and **in that** the limit value (BG) is varied from measurement cycle (M) to measurement cycle (M).

14. Control device as defined in claim 13, **characterized in that** the limit value (BG2, BG3) is increased during the next measurement cycle (M) in relation to the limit value (BG1, BG2) of the preceding measurement cycle (M).

15. Control device as defined in any one of claims 1 to 11, **characterized in that** the blocking means (24) is so configured that a comparison of the voltages (U) with different limit values (BG1' ... BG4') is carried out within a measurement cycle (M).

16. Control device as defined in claim 15, **characterized in that** a comparison with a different limit value (BG1, BG2, BG3, BG4) is carried out for each voltage sampling (A1 ... A4) within a measurement cycle (M).

17. Control device as defined in claim 16, **characterized in that** during the voltage samplings (A1 ... A4) the next voltage sampling (A2 ... A4) is carried out at a higher limit value (BG2, BG3, BG4) than the preceding voltage sampling (A1 ... A3).

18. Control device as defined in any one of the preceding claims, **characterized in that** the blocking means (24) is so configured that at least one of the limit values (BG2, BG3, BG4) is determined as a function of a pulse duty ratio of the pulse-width-modulated control signal (SPWM).

19. Control device as defined in any one of the preceding claims, **characterized in that** the blocking means (24) is so configured that the at least one limit value (BG2, BG3, BG4) is determined taking the supply voltage (UV) into consideration.

20. Control device as defined in claim 18 or 19, **characterized in that** the limit value (BG2, BG3, BG4) is determined from a stored set of parameters.

## Revendications

1. Appareil de commande pour l'actionnement d'un unique circuit de charge (12) présentant au moins un moteur électrique (M1, M2), comprenant un étage de commande (14), configuré de manière à produire un signal de commande (SPWM) à modulation d'impulsions en largeur, un étage de puissance (16) alimentant le circuit de charge (12) avec un commutateur électronique commandé par le signal de commande (SPWM) à modulation d'impulsions en largeur, un élément de marche à vide (22) branché parallèlement au circuit de charge et une unité de surveillance (24), qui est configurée de manière à, par suppression d'au moins un intervalle d'enclenchement du signal de commande (SPWM) à modulation d'impulsions en largeur, produire un intervalle de déconnexion de mesure (MAI) dans lequel, lorsque le moteur électrique n'est pas bloqué, après un temps de marche à vide une tension de générateur (U_{G}) peut être détectée, et pendant l'intervalle de déconnexion de mesure (MAI) la tension (U) dans le circuit de charge (12) est surveillée et comparée à une valeur limite (BG),
**caractérisé en ce qu'**au moins deux moteurs électriques (M1, M2) branchés en parallèle dans le circuit de charge sont prévus, que la surveillance est une surveillance de blocage (24), qui est configurée de telle manière que s'exécute un protocole de test (PL) avec au moins un cycle de mesure (M),dans lequel, à différents moments définis (t₁ à t₄) après le début (t₀), d'au moins un intervalle de déconnexion de mesure (MAI), a lieu un échantillonnage de tension (A1
... A4), que les tensions (U1 ... U4) déterminées dans le circuit de charge (12) pendant les échantillonnages de tension (A1 ... A4) sont comparées à au moins une valeur limite de blocage (BG) et qu'en l'absence de dépassement de la au moins une valeur limite de blocage (BG), un signal d'état de blocage est produit.

2. Appareil de commande suivant la revendication 1, **caractérisé en ce que** la surveillance de blocage (24) est configurée de manière que, pendant un cycle de mesure, les échantillonnages de tension (A1 ... A4) dans le circuit de charge (12) sont effectués à différents moments (t₁ ... t₄) sous forme d'une série d'échantillonnages de tension (A1 ... A4) et, dans la série, les échantillonnages de tension suivants (A2 ... A4) sont à chaque fois effectués à un intervalle de temps plus grand (t₂ ... t₄) depuis le début (t₀) du au moins un intervalle de déconnexion de mesure (MAI) que l'échantillonnage de tension précédent dans la série (A1 ... A3).

3. Appareil de commande suivant la revendication 2, **caractérisé en ce que**, dans la série, l'intervalle de temps entre des échantillonnages de tension consécutifs est environ de la même longueur.

4. Appareil de commande suivant l'une quelconque des revendications précédentes, **caractérisé en ce que** la surveillance de blocage (24) est configurée de manière que les échantillonnages de tension (A1 ... A4) d'un cycle de mesure (M) se fassent pendant un intervalle de déconnexion de mesure (MAI).

5. Appareil de commande suivant l'une quelconque des revendications précédentes, **caractérisé en ce que** le protocole de test (PL) comprend plusieurs cycles de mesure (M).

6. Appareil de commande suivant la revendication 5, **caractérisé en ce qu'**un test de blocage complet est effectué pendant chaque cycle de mesure (M) dans l'intervalle de déconnexion de mesure (MAI).

7. Appareil de commande suivant l'une quelconque des revendications précédentes, **caractérisé en ce que** le dispositif de blocage (24) est configuré de manière qu'avant l'émission d'un signal d'état de blocage est effectué un protocole de test (PL) avec plusieurs cycles de mesure.

8. Appareil de commande suivant la revendication 7, **caractérisé en ce que**, lors d'une unique détection d'un état bloqué du circuit de charge (12) pendant un cycle de mesure (M) du protocole de test (PL), aucun blocage n'est signalé.

9. Appareil de commande suivant la revendication 7 ou 8, **caractérisé en ce que**, après la détection d'un état libre de blocage du circuit de charge (12), le protocole de test (PL) est interrompu.

10. Appareil de commande suivant l'une quelconque des revendications précédentes, **caractérisé en ce que** le dispositif de blocage (24) est configuré de manière que, via les échantillonnages de tension (A1 ... A4), tant la durée du temps de marche à vide (F) que la grandeur de la tension de générateur (U_{G}) après le temps de marche à vide (F) sont contrôlées.

11. Appareil de commande suivant la revendication 10, **caractérisé en ce que** la grandeur de la tension de générateur (U_{G}) est déterminée par différentes valeurs limites (BG1 ... BG4) pour différents échantillonnages de tension (A1 ... A4) pendant le protocole de test (PL).

12. Appareil de commande suivant l'une quelconque des revendications précédentes, **caractérisé en ce que** le dispositif de blocage (24) est configuré de telle manière que la valeur limite (B) est constante durant un cycle de mesure (M).

13. Appareil de commande suivant la revendication 12, **caractérisé en ce que** plusieurs cycles de mesure (M) sont exécutés, et que la valeur limite (BG) varie d'un cycle de mesure (M) à un cycle de mesure (M) est modifiée.

14. Appareil de commande suivant la revendication 13, **caractérisé en ce que** la valeur limite (BG2, BG3) dans un cycle de mesure (M) suivant est augmentée par rapport à la valeur limite (BG1, BG2) du cycle de mesure (M) précédent.

15. Appareil de commande suivant l'une quelconque de revendications 1 à 11, **caractérisé en ce que** le dispositif de blocage (24) est configuré de manière que dans un cycle de mesure (M) a lieu une comparaison des tensions (U) avec différentes valeurs limites (BG1' ... BG4').

16. Appareil de commande suivant la revendication 15, **caractérisé en ce que**, lors de chaque échantillonnage de tension (A1 ... A4) pendant un cycle de mesure (M), a lieu une comparaison avec une valeur limite différente (BG1, BG2, BG3, BG4).

17. Appareil de commande suivant la revendication 16, **caractérisé en ce que**, lors des échantillonnages de tension (A1 ... A4), l'échantillonnage de tension suivant (A2 ... A4) se fait pour une plus haute valeur limite (BG2, BG3, BG4) que pour l'échantillonnage de tension précédent (A1 ... A3).

18. Appareil de commande suivant l'une quelconque des revendications précédentes, **caractérisé en ce que** le dispositif de blocage (24) est configuré de manière qu'au moins une des valeurs limites (BG2, BG3, BG4) soit déterminée en fonction d'un taux d'impulsions du signal de commande à modulation d'impulsions en largeur (SPWM).

19. Appareil de commande suivant l'une quelconque des revendications précédentes, **caractérisé en ce que** le dispositif de blocage (24) est configuré de manière qu'au moins une valeur limite (BG2, BG3, BG4) soit déterminée en considérant la tension d'alimentation (UV).

20. Appareil de commande suivant la revendication 18 ou 19, **caractérisé en ce que** la valeur limite (BG2, BG3, BG4) est déterminée sur base d'un jeu de paramètres en mémoire.
